(19) Europäisches Patentamt / European Patent Office / Office européen des brevets

(11) **EP 3 145 778 B1**

(12) **EUROPEAN PATENT SPECIFICATION**

(45) Date of publication and mention of the grant of the patent:
**07.08.2024 Bulletin 2024/32**

(21) Application number: **15795611.1**

(22) Date of filing: **20.05.2015**

(51) International Patent Classification (IPC):
**B60W 30/14** *(2006.01)* **B60K 31/00** *(2006.01)*
**B60W 40/072** *(2012.01)* **B60W 50/00** *(2006.01)*
**B60W 30/18** *(2012.01)*

(52) Cooperative Patent Classification (CPC):
**B60W 50/0097; B60W 30/143;** B60W 30/18145;
B60W 2552/30; B60W 2555/60; B60W 2556/50;
B60W 2720/103; Y02T 10/40

(86) International application number:
**PCT/SE2015/050571**

(87) International publication number:
**WO 2015/178841 (26.11.2015 Gazette 2015/47)**

(54) **METHOD AND SYSTEM FOR ADAPTING THE VELOCITY OF A VEHICLE DURING DRIVING OF THE VEHICLE ALONG A ROUTE OF TRAVEL**

VERFAHREN UND SYSTEM ZUR ANPASSUNG DER GESCHWINDIGKEIT EINES FAHRZEUGS WÄHREND DES FAHRENS EINES FAHRZEUGS ENTLANG EINER REISEROUTE

PROCÉDÉ ET SYSTÈME POUR ADAPTER LA VITESSE D'UN VÉHICULE PENDANT LA CONDUITE DU VÉHICULE LE LONG D'UN ITINÉRAIRE DE DÉPLACEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2014 SE 1450599**

(43) Date of publication of application:
**29.03.2017 Bulletin 2017/13**

(73) Proprietor: **Scania CV AB**
**151 87 Södertälje (SE)**

(72) Inventors:
• **ANDERSSON, Jonny**
**S-151 68 Södertälje (SE)**

• **BREDBERG, Linus**
**S-146 34 Tullinge (SE)**

(74) Representative: **Scania CV AB**
**Patents, GP 117kv**
**151 87 Södertälje (SE)**

(56) References cited:
WO-A1-03/104014          WO-A1-2010/139383
WO-A1-2010/139383          DE-A1- 102007 036 794
DE-A1- 102007 036 794     DE-A1- 102013 221 662
US-A1- 2014 067 226       US-A1- 2014 067 226

**Description**

TECHNICAL FIELD OF THE INVENTION

The invention concerns a method for adapting the velocity of a vehicle during driving of the vehicle along a route of travel according to the preamble to claim 1. The invention concerns a system for adapting the velocity of a vehicle during driving of the vehicle along a route of travel. The invention also concerns a motor vehicle. The invention also concerns a computer program and a computer program product.

BACKGROUND

Cruise controls and similar driver aids are becoming more and more intelligent. Today there is a plurality of systems on the market that use cartographic data to drive the vehicle.

WO2010139383 and WO03104014 describe driver assistance systems for regulating vehicle velocity when taking curves.

WO2010139383 describes velocity control that takes into account the upcoming stretch of road, e.g. an upcoming curve, wherein a maximum velocity profile for the maximum safe velocity is determined based on cartographic data and a limit velocity profile, wherein the vehicle velocity is controlled toward the maximum velocity profile as long as the velocity is not less than the limit velocity.

Driver assistance in the form of cruise control that takes the curvature or prevailing velocity limitations of the road into account naturally has the avoidance of braking as an objective. However, braking is often still necessary, as, for example, the topography of the road or the drivability of the vehicle must be taken into account.

US2014067226 A1 describes a method and cruise control system for the safe driving of a vehicle along a road with velocity-limiting factors. A preset velocity is compared to the prevailing speed limit, and an offset is determined as the difference between these two velocities. Said offset is maintained even when the prevailing speed limit changes. Thus, if the driver desires a velocity that is higher than the prevailing speed limit by 5 km/h, the system continues to control towards a velocity that is 5 km/h higher than the prevailing speed limit, even when the speed limit is changed.

OBJECT OF THE INVENTION

One object of the present invention is to provide a method and a system for adapting the velocity of a vehicle during driving of the vehicle along a route of travel that enables safety and fuel-efficient driving of the vehicle in connection with velocity-limiting factors.

SUMMARY OF THE INVENTION

This and other objects, which are specified in the description below, are achieved by means of a method, a system, a motor vehicle, a computer program and a computer program product of the types described above, and which further exhibit the features specified in the characterizing part of the accompanying independent claims. Preferred embodiments of the method and the system are defined in the accompanying non-independent claims.

According to the invention, these objects are achieved by means of a method for adapting the velocity of a vehicle during driving of the vehicle along a route of travel, comprising the steps of: prescribing velocity in the form of a velocity profile comprising retardations along the route of travel of the vehicle based on the occurrence of velocity-limiting factors along the route of travel of the vehicle; and prescribing a target velocity associated with a velocity-limiting factor, comprising the step of steering the vehicle velocity so that a velocity associated with said target velocity is permitted to be higher than the target velocity by a given offset, wherein said offset is adapted so that a relatively larger offset is permitted in connection with a non-safety-critical velocity-limiting factor and a relatively smaller offset is permitted in connection with a safety-critical velocity-limiting factor.

The acceleration required to achieve the prescribed target velocity at an occurring factor is appropriately determined. In connection with the occurrence of a plurality of velocity-limiting factors along the route of travel of the vehicle, target velocities are prescribed for all factors, as well as the retardation required to achieve each respective target velocity. The required retardation based on occurring velocity-limiting factors preferably serves as the basis for the prescribed velocity in the form of a velocity profile. A prescribed velocity in the form of a velocity profile can thus be associated with the prescribed target velocity. An offset by which the vehicle velocity is permitted to exceed the target velocity is determined, and the vehicle velocity is controlled so that it is permitted to be higher than the target velocity by said offset. The vehicle velocity is thus controlled so that it is permitted to exceed the velocity profile associated with the prescribed target velocity. Said offset is suitably determined based on velocity-limiting factors from a safety perspective. Said offset can be determined based on vehicle characteristics.

A flexible means of adapting the driving of the vehicle for fuel-efficient driving in connection with non-safety-critical velocity-limiting factors such as changes in velocity limitation along the route of travel of the vehicle and of ensuring safe driving in connection with safety-critical velocity-limiting factors, such as curvature, is enabled hereby. Thus controlling the vehicle velocity provides for more comfortable driving of the vehicle, in that braking can be avoided at non-critical velocity-limiting factors. For non-safety-critical velocity-limiting factors, the driver can himself be permitted to set the desired offset in dependence upon, for example, the desired riding comfort and fuel economy when driving the vehicle. The vehicle velocity is thus permitted to vary relative to the target velocity within certain limits up to a velocity that exceeds the target velocity by said offset. This is particularly advantageous when driving in hilly terrain. For example, a vehicle can be permitted to roll up to a higher velocity than the target velocity on a downhill stretch in order to save fuel. The limit, i.e. said offset, is set in particular for the permissible variation, particularly the variation up toward a higher velocity, in dependence upon velocity-limiting factors.

According to one embodiment of the method, safety-critical velocity-limiting factors include speed limits when taking curves. This ensures that the vehicle is driven safely when taking curves.

According to one embodiment of the method, non-safety-critical velocity-limiting factors include changes in velocity limitation along the route of travel of the vehicle. This enables more fuel-efficient driving in connection with changes in velocity limitation along the route of travel of the vehicle while avoiding unnecessary braking.

According to one embodiment, the method comprises the step of executing said velocity profile by continuously determining required retardations. This further increases the possibility of safe, fuel-efficient and comfortable driving of the vehicle in connection with velocity-limiting factors by controlling the vehicle velocity while taking into account the velocity profile thus executed.

The embodiments of the system exhibit advantages corresponding to those of the corresponding embodiment of the aforementioned method.

FIGURE DESCRIPTION

The present invention will be better understood with reference to the following detail description read in conjunction with the accompanying drawings, wherein the same reference designations refer to the same parts throughout the many views, and in which:

Fig. 1 schematically illustrates a motor vehicle according to one embodiment of the present invention;

Fig. 2 schematically illustrates a system for adapting the velocity of a vehicle during driving of the vehicle along a route of travel according to one embodiment of the present invention;

Fig. 3a schematically illustrates a velocity profile for taking a curve representing a target velocity plus a permissible velocity that exceeds the target velocity by a given offset according to one embodiment of the present invention;

Fig. 3b schematically illustrates a velocity profile for a change in velocity limitation representing a target velocity plus a permissible velocity that exceeds the target velocity by a given offset according to one embodiment of the present invention;

Fig. 4 schematically illustrates a block diagram of a method for adapting the velocity of a vehicle during driving of the vehicle along a route of travel according to one embodiment of the present invention; and

Fig. 5 schematically illustrates a computer according to one embodiment of the present invention.

DESCRIPTION OF EMBODIMENTS

The term "link " refers herein to a communication link, which can be a physical line, such as an opto-electronic communication line, or a non-physical line, such as a wireless connection, for example a radio or microwave link.

The term "continuously determine" refers herein, for example in connection with "continuously determining required retardations," to non-incremental determination or incremental determination, i.e. where the determination occurs with at a repeated frequency that can be regular, and that can be time-based or distance-based.

The term "velocity-limiting factors" refers herein to any arbitrary factors along the route of travel of the vehicle that entail that a velocity limitation of the vehicle is called for. "Velocity-limiting factors" include the curvature along the route of travel of the vehicle. "Velocity-limiting factors" include the speed limit along the route of travel of the vehicle. "Velocity-limiting factors" could also include other factors such as a narrowing road, roadwork along the route of travel of the vehicle, obstacles such as speed bumps along the route of travel of the vehicle, a degraded road surface, increased traffic density/risk of congestion etc.

The term "safety-critical velocity-limiting factors" refers herein to any safety-critical factors along the route of travel of the vehicle that entail that a velocity limitation of the vehicle is called for, and that would entail a potential safety risk if the velocity limitation were to be exceed to a given extent. Safety-critical velocity-limiting factors include the curvature along the route of travel of the vehicle. Safety-critical velocity-limiting factors could also include other factors such as a narrowing road, roadwork along the route of travel of the vehicle, obstacles such as speed bumps along the route of travel of the vehicle, a degraded road surface, increased traffic density/risk of congestion etc, but also, in relevant instances, a speed limit requiring a low velocity such as 30 km/h, depending upon the situation.

The term "non-safety-critical velocity-limiting factors" refers herein to any factors along the route of travel of the vehicle that entail that a non-safety-critical velocity limitation of the vehicle is called for. Non-safety-critical velocity-limiting factors include speed limits along the route of travel of the vehicle, e.g. from 90 to 70 or 70 to 50 km/h.

The term "target velocity" refers herein to a velocity associated with a velocity-limiting factor such as a safety-critical velocity-limiting factor, for example a curvature, or a non-safety-critical factor, for example a speed limit.

The term "offset" refers herein to an upper limit for the extent to which the vehicle velocity is permitted to exceed a target velocity corresponding to a velocity-limiting factor. Said offset can be an arbitrary value. Said offset can be between 0.2-3 km/h for a safety-critical velocity-limiting factor, and preferably between 0.3-2 km/h. Said offset can be between 1-30 km/h for a non-safety-critical velocity-limiting factor.

The term "to control the vehicle velocity so that a velocity associated with said target velocity is permitted to be higher than the target velocity by a given offset" refers herein to the velocity being permitting to vary relative to the target velocity within certain limits up to a velocity that exceeds the target velocity by said offset.

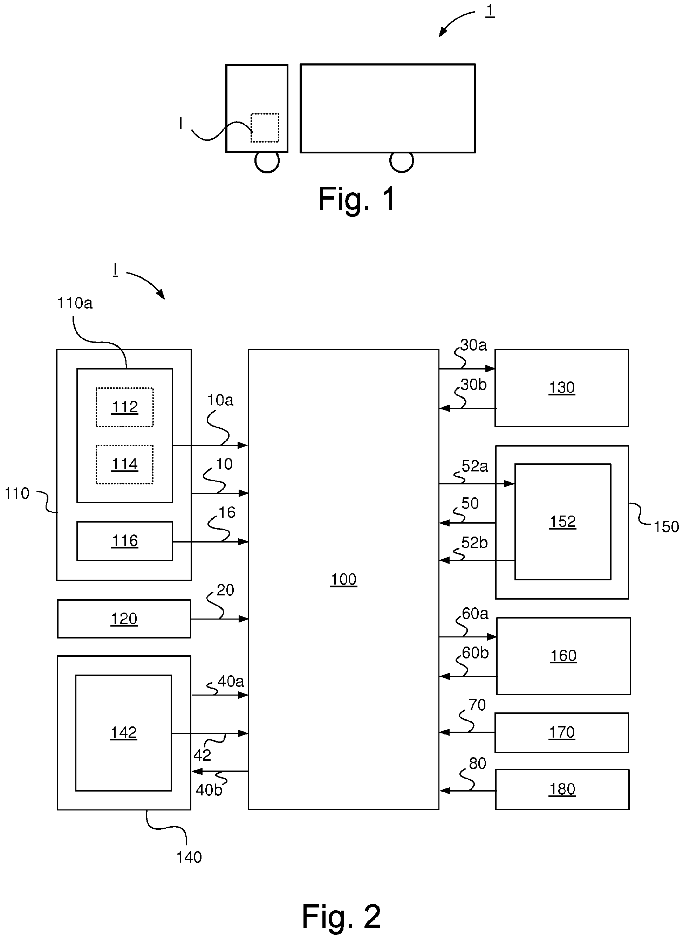

Fig. 1 schematically illustrates a motor vehicle 1 according to one embodiment of the present invention. The exemplary vehicle 1 consists of a heavy vehicle in the form of a goods vehicle. The vehicle can alternatively consist of any arbitrary vehicle, such as a bus or a car. The vehicle contains a system I according to the present invention.

Fig. 2 schematically illustrates a block diagram of a system I for adapting the velocity of a vehicle during driving of the vehicle along a route of travel according to one embodiment of the present invention.

The system I comprises an electronic control unit 100.

The system I comprises means 110 for determining the occurrence of velocity-limiting factors along the route of travel of the vehicle. The determination of the occurrence of velocity-limiting factors along the route of travel of the vehicle preferably occurs continuously by means of the means 110.

Said velocity-limiting factors comprise safety-critical velocity-limiting factors including the curvature of the route of travel. Said velocity-limiting factors include the non-safety-critical velocity-limiting factors changes in velocity limitation along the route of travel of the vehicle.

The means 110 for determining the occurrence of velocity-limiting factors along the route of travel of the vehicle comprise means for determining whether a determined velocity-limiting factor is safety-critical or non-safety-critical.

According to one variant, the means 110 for determining the occurrence of velocity-limiting factors along the route of travel of the vehicle comprise a cartographic information unit 112 containing cartographic data including characteristics of the roadway along the route of travel of the vehicle, including velocity-limiting factors in the form of curvature and changes in velocity limitation along the route of travel of the vehicle.

According to one variant, the means 110 for determining the occurrence of velocity-limiting factors along the route of travel of the vehicle comprise means 114 for determining the vehicle position. The means 114 for determining the vehicle position comprise a geographic positioning system for continuously determining the vehicle position along the route of travel. An example of a geographic positioning system can be GPS.

According to one variant, the cartographic information unit 112 and the means 114 for determining the vehicle position are comprised in means 110a for determining the route of travel of the vehicle, wherein the means for determining the route of travel of the vehicle are arranged so as to provide predetermined characteristics of the roadway along the route of travel of the vehicle, including velocity-limiting factors in the form of curvature and changes in velocity limitation along the route of travel of the vehicle. Said cartographic data in the cartographic information unit 112 also include characteristics of the roadway along the route of travel of the vehicle, including topography.

The cartographic information unit 112 and the means 114 for determining the vehicle position consequently make it possible to continuously identify the vehicle position and characteristics of the roadway, including velocity-limiting factors in the form of curvature and changes in velocity limitation along the route of travel of the vehicle.

According to one variant, the means 110 for determining the occurrence of velocity-limiting factors along the route of travel of the vehicle comprise a camera element 116. The camera element 116 is arranged so as to detect characteristics of the roadway, including velocity-limiting factors in the form of curvature and changes in velocity limitation along the route of travel of the vehicle. The camera element 116 is arranged so as to detect the conformation of the widening of the road comprising bends in the roadway and/or road markings in order to thereby determine bends in the roadway along which the vehicle is traveling. The camera element 116 is arranged so as to detect road signs along the route of travel of the vehicle comprising speed limit signs, wherein the camera element 116 is arranged so as to determine changes in velocity limitation along the route of travel of the vehicle by sensing speed limit signs. The camera element can comprise one or more cameras for such detection.

According to one variant, the means 110 for determining the occurrence of velocity-limiting factors along the route of travel of the vehicle comprise communication means for communication between the vehicle and other vehicles or between the vehicle and other entities in order to communicate velocity-limiting factors such as the start of congestion or the like.

The means 110 for continuously determining the occurrence of velocity-limiting factors along the route of travel of the vehicle include means for performing said determination based on a predetermined distance- and/or time horizon ahead of the vehicle along the route of travel of the vehicle.

According to one embodiment, the means 110 for continuously determining the occurrence of velocity-limiting factors along the route of travel of the vehicle comprise means for performing said determination based on a predetermined distance horizon ahead of the vehicle along the route of travel of the vehicle, wherein said distance horizon constitutes a suitable window in the form of a distance from the current vehicle position and forward along the route of travel of the vehicle. According to one embodiment, the magnitude of the distance horizon is on the order of several hundred meters, e.g. roughly 500 meters.

The system I comprises means 120 for continuously determining the vehicle velocity. According to one variant, the means 120 for continuously determining the vehicle velocity comprise velocity-measuring elements.

The system I comprises means 130 for prescribing a target velocity associated with a velocity-limiting factor.

The system I comprises means 140 for determining, in connection with the determination of a velocity-limiting factor, the retardation required to achieve the prescribed target velocity at an occurring velocity-limiting factor.

The means 140 for determining, in connection with the determination of a velocity-limiting factor, the retardation required to achieve the prescribed target velocity at an occurring velocity-limiting factor are arranged for continuous determination.

According to one variant, the required retardation a is determined via the equation:

$$a = \frac{v^2 - v_0^2}{2 * s}$$

Here v is the velocity that corresponds to the prescribed target velocity at an occurring velocity-limiting factor, $v_0$ the current velocity, a is the required retardation and s is the distance to the position of the velocity-limiting factor.

The means 140 for determining the retardation required to achieve the prescribed velocity at an occurring velocity-limiting factor comprise means 142 for continuously determining driving resistance along the route of travel of the vehicle, wherein the driving resistance comprises one or more of the grade resistance, friction characteristics of the roadway, air resistance and rolling resistance.

According to one variant, the acceleration contribution, $a_{resavg}$ that the driving resistance $F_{res}$ generates over the relevant distance horizon s is determined by the following equation, where m represents the mass of the vehicle:

$$a_{resavg} = \frac{\int_0^s F_{res}(s) * ds}{s * m}$$

According to one variant, the total required acceleration $a_{tot}$ is determined, taking into account the driving resistance, via the equation:

$$a_{tot}(s) = a + \max\left(0, a_{resavg}\right)$$

The positive part of the driving resistance is taken into account via the term max(0, $a_{resavg}$) in order to thus avoid braking on downhill stretches.

The system I comprises means 150 for controlling the vehicle velocity so that a velocity associated with said target velocity is permitted to be higher than the target velocity by a given offset.

The means 150 for controlling the vehicle velocity so that a velocity associated with said target velocity is permitted to be higher than the target velocity by a given offset comprise means 152 for adapting said offset so that a relatively larger offset is permitted in connection with a non-safety-critical velocity-limiting factor and a relatively smaller offset is permitted in connection with a safety-critical velocity-limiting factor.

Safety-critical velocity-limiting factors include velocity limitations when taking curves.

Non-safety-critical velocity-limiting factors include changes in velocity limitation along the route of travel of the vehicle. In connection with a non-safety-critical velocity-limiting factor comprising a change in velocity limitation along the route of travel of the vehicle, the system I is configured so that the driver himself is permitted to set the offset to a desired level higher than the target velocity.

According to one variant, safety-critical velocity-limiting factors also comprise other factors, such as a narrowing road, roadwork along the route of travel of the vehicle, obstacles such as speed bumps along the route of travel of the vehicle, a degraded road surface, increased traffic density/risk of congestion, etc.

The system I comprises means 160 for prescribing velocity in the form of a velocity profile comprising retardations along the route of travel of the vehicle based on the occurrence of velocity-limiting factors along the route of travel of the vehicle. The velocity-limiting factors can include safety-critical velocity-limiting factors such as curvature/driving on curves and non-safety-critical velocity-limiting factors such as changes in velocity limitation along the route of travel of the vehicle.

The system I further comprises means 170 for executing said velocity profile through continuous determination of required retardations.

The system I comprises means 180 for determining a maximum permissible lateral acceleration. The means 180 for determining a maximum permissible lateral acceleration comprise the determination of a predetermined maximum permissible lateral acceleration, which is based on normal conditions with respect to vehicle characteristics, such as the length of the vehicle, width of the vehicle, carriage composition of the vehicle, load distribution of the vehicle, center of gravity of the vehicle, axle pressure of the vehicle and/or environmental characteristics such as the effective lane width, friction characteristics of the roadway, visibility conditions and the slope characteristics of the roadway. According to one embodiment, the predetermined maximum permissible lateral acceleration is on the order of 2 m/s². The maximum permissible lateral acceleration here consists of a predetermined maximum permissible lateral acceleration. According to one alternative or complementary variant, the electronic control unit 100 contains stored data concerning the maximum permissible lateral acceleration.

The determination of the maximum vehicle velocity $v_{max}$ and thus the velocity profile based on the maximum permissible lateral information utilizes information about the curvature of the roadway along the route of travel of the vehicle, whereupon the following is used, according to one variant:

$$v_{max}(s) = \sqrt{|a_{lat,max}(s)/c(s)|}$$

where $v_{max}(s)$ is the maximum velocity for the stretch s ahead of the vehicle, $a_{lat,max}(s)$ is the maximum permissible lateral acceleration on the stretch s ahead of the vehicle and $c(s)$ is the curvature of the stretch s ahead of the vehicle. $v_{max}$ thus constitutes the target velocity for a safety-critical velocity-limiting factor in the form of curvature along the route of travel of the vehicle. Where no curvature is present, the speed limit for the road and thus a non-safety-critical velocity-limiting factor in the form of a change in velocity along the route of travel of the vehicle constitutes the maximum permissible velocity $v_{max}$, and thus the target velocity.

The means 150 are arranged so as to control the vehicle velocity so that a velocity $v_{max,brake}$ associated with said target velocity $v_{max}$ is permitted to be higher than the target velocity by a given $v_{offset}$. $v_{max,brake}$ is thus:

$$v_{max,brake}(s) = v_{max}(s) + v_{offset}(s)$$

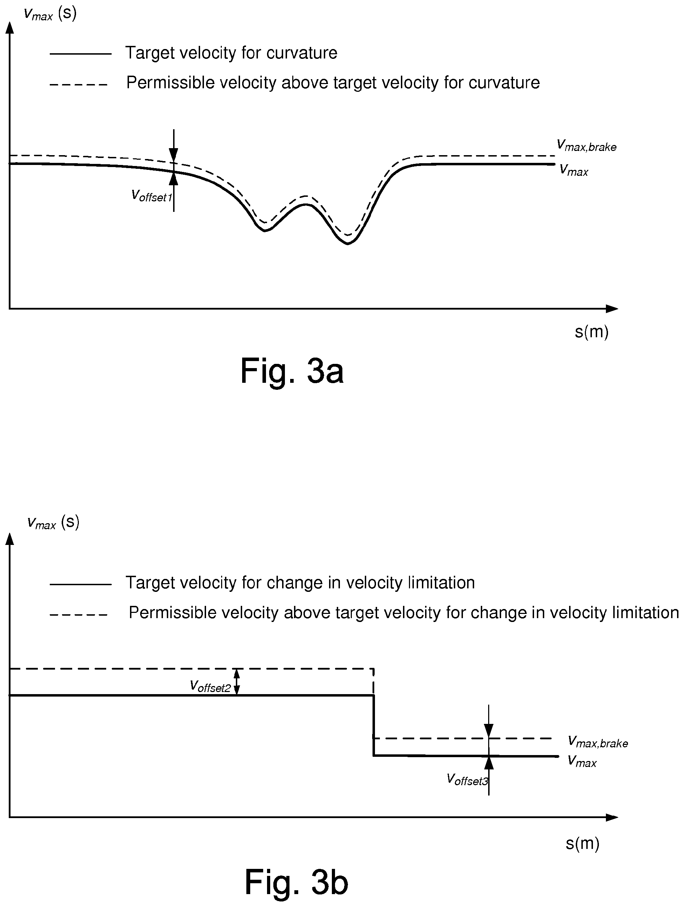

The means 152 are thus arranged so as to adapt said offset $v_{offset}$ so that a relatively larger offset is permitted in connection with a non-safety-critical velocity-limiting factor and a relatively smaller offset is permitted in connection with a safety-critical velocity-limiting factor. Figs. 3a and 3b show examples of this.

According to one variant, the means 152 are also arranged so as to adapt said offset $v_{offset}$ so that a relatively larger offset is permitted in connection with a non-safety-critical velocity-limiting factor with a given higher velocity, and a relatively smaller offset is permitted in connection with a non-safety-critical velocity-limiting factor with a velocity that is lower relative to the higher velocity. According to one example, the offset at 70 km/h could be on the order of 20 km/h, while the offset at 30 km/h could be on the order of 8 km/h. According to one variant, velocity limitation to 30 km/h could constitute a safety-critical velocity-limiting factor. The offset for a non-safety-critical velocity-limiting factor can be variable, so that the driver is permitted to set such an offset corresponding to a non-safety-critical velocity-limiting factor based on his desires and needs with respect to the driving of the vehicle.

The electronic control unit 100 is in signal communication with the means 110 for determining the occurrence of velocity-limiting factors along the route of travel of the vehicle via a link 10. The electronic control unit 100 is arranged so as to receive, via the link 10, a signal from the means 110 representing data for velocity-limiting factors such as curvature and/or changes in velocity limitation.

The electronic control unit 100 is in signal communication with the means 110a comprising the cartographic information unit 112 and the means 114 for determining the vehicle position via a link 10a. The electronic control unit 100 is arranged so as to receive, via the link 10a, a signal from the means 110a representing cartographic data for velocity-limiting factors in the form of curvature and changes in velocity limitation along the route of travel of the vehicle, and position data for the position of the curvature relative to the vehicle.

The electronic control unit 100 is in signal communication with the camera element 116 via a link 16. The electronic control unit 100 is arranged so as to receive, via the link 16, a signal from the camera element 116 representing data for velocity-limiting factors comprising curvature data for the curvature of the roadway along the route of travel of the vehicle and data for changes in velocity limitation along the route of travel of the vehicle.

The electronic control unit 100 is in signal communication with the means 120 for continuously determining the vehicle velocity via a link 20. The electronic control unit 100 is arranged so as to receive, via the link 20, a signal from the means 120 for continuously determining the vehicle velocity representing velocity data for the current vehicle velocity.

The electronic control unit 100 is in signal communication with the means 130 for prescribing a target velocity associated with a velocity-limiting factor via a link 30a. The electronic control unit 100 is arranged so as to send, via the link 30a, a signal to the means 130 representing velocity data for a velocity corresponding to a velocity-limiting factor.

The electronic control unit 100 is in signal communication with the means 130 for prescribing a target velocity associated with a velocity-limiting factor via a link 30b. The electronic control unit 100 is arranged so as to receive, via the link 30b, a signal from the means 130 representing velocity data for the prescribed target velocity associated with the velocity-limiting factor.

The electronic control unit 100 is in signal communication with the means 140 for determining, in connection with the determination of a velocity-limiting factor, the acceleration required to achieve the prescribed target velocity at an occurring velocity-limiting factor via a link 40a. The electronic control unit 100 is arranged so as to receive, via the link 40a, a signal from the means 140 representing retardation data for the retardation data required to achieve the target velocity for the determined velocity-limiting factor at the velocity-limiting factor.

The electronic control unit 100 is in signal communication with the means 142 for continuously determining driving resistance along the route of travel of the vehicle via a link 42. The electronic control unit 100 is arranged so as to receive, via the link 42, a signal from the means 142 representing driving resistance data.

The electronic control unit 100 is in signal communication with the means 140 for determining, in connection with the determination of a velocity-limiting factor, the acceleration required to achieve the prescribed target velocity at an occurring velocity-limiting factor via a link 40b. The electronic control unit 100 is arranged so as to send, via the link 40b, a signal to the means 140 representing velocity data for the current vehicle velocity, data for the velocity-limiting factor, data concerning the distance to the velocity-limiting factor, and driving resistance data.

The electronic control unit 100 is in signal communication with the means 150 for controlling the vehicle velocity so that a velocity associated with said target velocity is permitted to be higher than the target velocity by a given offset via a link 50. The electronic control unit 100 is arranged so as to receive, via the link 50, a signal from the means 150 representing velocity data for a velocity associated with the target velocity and higher than the target velocity by a given offset.

The electronic control unit 100 is in signal communication with the means 152 for adapting said offset so that a relatively larger offset is permitted in connection with a non-safety-critical velocity-limiting factor and a relatively smaller offset is permitted in connection with a safety-critical velocity-limiting factor via a link 52a. The electronic control unit 100 is arranged so as to send, via the link 52a, a signal to the means 152 representing data for the type of velocity-limiting factor, i.e. safety-critical velocity-limiting factors such as curvature, or non-safety-critical velocity-limiting factors such as a change in velocity limitation along the route of travel of the vehicle.

The electronic control unit 100 is in signal communication with the means 152 for adapting said offset so that a relatively larger offset is permitted in connection with a non-safety-critical velocity-limiting factor and a relatively smaller offset is permitted in connection with a safety-critical velocity-limiting factor via a link 52b. The electronic control unit 100 is arranged so as to receive, via the link 52b, a signal from the means 152 representing offset data concerning the offset for the vehicle velocity higher than the target velocity toward which the vehicle is to be controlled, based on whether the velocity-limiting factor is safety-critical or non-safety-critical.

The electronic control unit 100 is in signal communication with the means 160 for prescribing velocity in the form of a velocity profile comprising retardations along the route of travel of the vehicle based on the occurrence of velocity-limiting factors along the route of travel of the vehicle via a link 60a. The electronic control unit 100 is arranged so as to send, via the link 60a, a signal to the means 160 representing retardation data for the required retardation.

The electronic control unit 100 is in signal communication with the means 160 for prescribing velocity in the form of a velocity profile comprising retardations along the route of travel of the vehicle based on the occurrence of velocity-limiting factors along the route of travel of the vehicle via a link 60b. The electronic control unit 100 is arranged so as to receive, via the link 60b, a signal from the means 160 representing velocity data for a prescribed velocity corresponding to a velocity profile.

The electronic control unit 100 is in signal communication with the means 170 for executing said velocity profile by continuously determining required retardations via a link 70. The electronic control unit 100 is arranged so as to receive, via the link 70, a signal from the means 170 representing execution data for executing the velocity profile.

The electronic control unit 100 is in signal communication with the means 180 for determining a maximum permissible lateral acceleration via a link 80. The electronic control unit 100 is arranged so as to receive, via the link 80, a signal from the means 180 representing lateral acceleration data for the maximum permissible lateral acceleration.

Fig. 3a schematically illustrates a velocity profile for taking a curve representing a target velocity $v_{max}$ and a permissible velocity $v_{max,brake}$ that exceeds the target velocity by a given offset $v_{offset1}$, according to one embodiment of the present invention.

Fig. 3b schematically illustrates a velocity profile for a change in velocity limitation representing a target velocity $v_{max}$ and a permissible velocity $v_{max,brake}$ that exceeds the target velocity by a given offset $v_{offset2}$, according to one embodiment of the present invention.

The means 150 for controlling the vehicle velocity so that a velocity associated with said target velocity is permitted to be higher than the target velocity by a given offset are thus arranged, by means of the means 152, so as to adapt said offset so that a relatively larger offset $v_{offset2}$, $v_{offset3}$ is permitted in connection with the non-safety-critical velocity-limiting factor in Fig. 3b in the form of a change in velocity, and so that a relatively smaller offset $v_{offset1}$ is permitted in connection with the safety-critical velocity-limiting factor in Fig. 3a in the form of a curvature, here an S curve.

Furthermore, the means 150 for controlling the vehicle velocity so that a velocity associated with said target velocity is permitted to be higher than the target velocity by a given offset are thus arranged, by means of the means 152, so as to adapt said offset so that a relatively larger offset $v_{offset2}$ is permitted at a higher velocity in connection with the non-safety-critical velocity-limiting factor and a relatively smaller offset $v_{offset3}$ is permitted at a lower velocity in connection with the non-safety-critical velocity-limiting factor.

According to one variant, the means 152 are arranged so as to adapt said offset so that a first offset is permitted at a given velocity in connection with the non-safety-critical velocity-limiting factor, and a second offset that differs from the first offset is permitted in connection with a velocity change to a different velocity in connection with the non-safety-critical velocity-limiting factor. According to one variant, said offset in connection with the non-safety-critical velocity-limiting factor is adjustable, so that the driver can have an offset consistent with the desired driving of the vehicle.

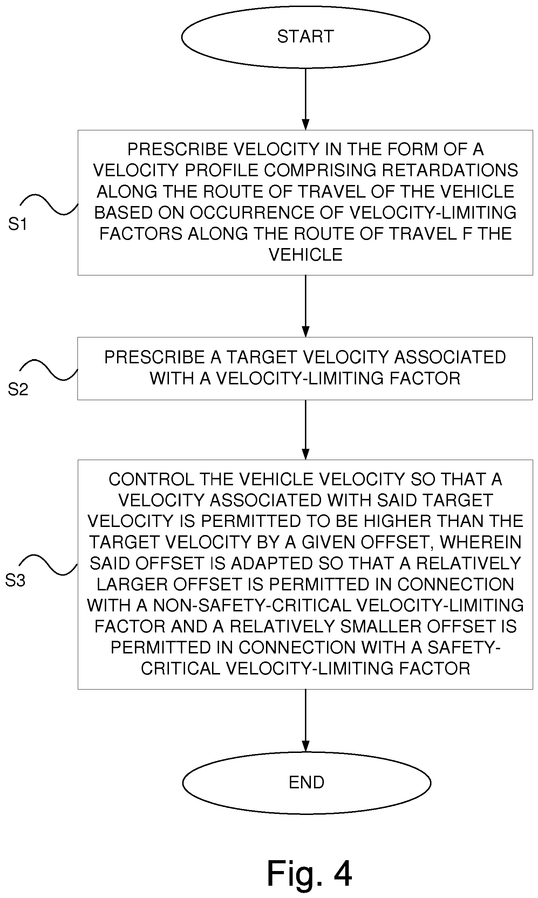

Fig. 4 schematically illustrates a block diagram of a method for adapting the velocity of a vehicle during driving of the vehicle along a route of travel according to one embodiment of the present invention.

According to one embodiment, the method for adapting the velocity of a vehicle during driving of the vehicle along a route of travel comprises a first step S1. In this step, a velocity is prescribed in the form of a velocity profile comprising retardations along the route of travel of the vehicle based on the occurrence of velocity-limiting factors along the route of travel of the vehicle

According to one embodiment, the method for adapting the velocity of a vehicle during driving of the vehicle along a route of travel comprises a second step S2. In this step, a target velocity associated with a velocity-limiting factor is prescribed.

According to one embodiment, the method for adapting the velocity of a vehicle during driving of the vehicle along a route of travel comprises a third step S3. In this step, the vehicle velocity is controlled so that a velocity associated with said target velocity is permitted to be higher than the target velocity by a given offset, wherein said offset is adapted so that a relatively larger offset is permitted in connection with a non-safety-critical velocity-limiting factor and a relatively smaller offset is permitted in connection with a safety-critical velocity-limiting factor.

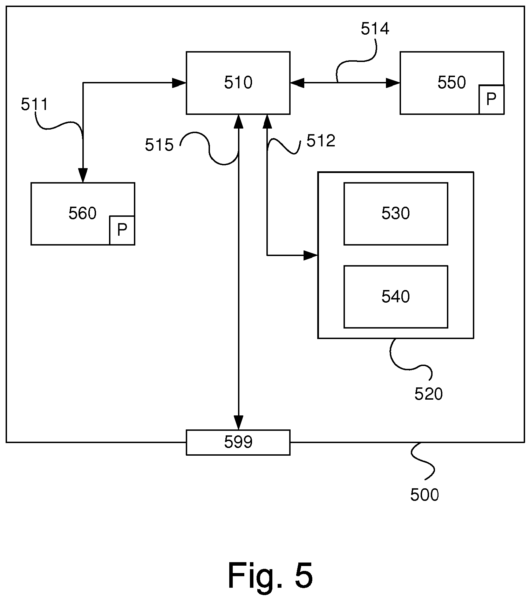

A diagram of an embodiment of a device 500 is shown with reference to Fig. 5. In one embodiment, the control unit 100 that is described with reference to Fig. 2 can comprise the device 500. The device 500 comprises a non-volatile memory 520, a data-processing unit 510 and a read/write memory 550. The non-volatile memory 520 has a first memory part 530 in which a computer program, such as an operating system, is stored for controlling the function of the device 500. The device 500 further comprises a bus controller, a serial communication port, I/O elements, an A/D converter, a time and date input and transfer unit, an event counter and an interrupt controller (not shown). The non-volatile memory 520 also has a second memory part 540.

A computer program P is provided that contains routines for adapting the velocity of a vehicle during driving of the vehicle along a route of travel according to the innovative method. The program P contains routines for prescribing velocity in the form of a velocity profile comprising retardations along the route of travel of the vehicle based on the occurrence of velocity-limiting factors along the route of travel of the vehicle. The program P contains routines for prescribing a target velocity associated with a velocity-limiting factor. The program P contains routines for controlling the vehicle velocity so that a velocity associated with said target velocity is permitted to be higher than the target velocity by a given offset, wherein said offset is adapted so that a relatively larger offset is permitted in connection with a non-safety-critical velocity-limiting factor and a relatively smaller offset is permitted in connect with a safety-critical velocity-limiting factor. The program P can be stored in executable fashion or compressed fashion in a memory 560 and/or in a read/write memory 550.

When it is stated that the data-processing unit 510 performs a given function, it is to be understood that the data-processing unit 510 executes a certain part of the program that is stored in the memory 560, or a certain part of the program that is stored in the read/write memory 550.

The data-processing device 510 can communicate with a data port 599 via a data bus 515. The non-volatile memory 520 is intended for communication with the data-processing unit 510 via a data bus 512. The separate memory 560 is intended to communicate with the data-processing unit 510 via a data bus 511. The read/write memory 550 is arranged so as to communicate with the data-processing unit 510 via a data bus 514. For example, the links connected to the control unit 100 can be connected to the data port 599.

When data are received at the data port 599, they are stored temporarily in the second memory part 540. Once received input data have been temporarily stored, the data-processing unit 510 is arranged so as to carry out the execution of code in a manner as described above. The signals received at the data port 599 can be used by the device 500 to prescribe velocity in the form of a velocity profile comprising retardations along the route of travel of the vehicle based on the occurrence of velocity-limiting factors along the route of travel of the vehicle. The signals received at the data port 599 can be used by the device 500 to prescribe a target velocity associated with a velocity-limiting factor. The signals received at the data port 599 can be used by the device 500 to control the vehicle velocity so that a velocity associated with said target velocity is permitted to be higher than the target velocity by a given offset, wherein said offset is adapted so that a relatively larger offset is permitted in connection with a non-safety-critical velocity-limiting factor and a relatively smaller offset is permitted in connection with a safety-critical velocity-limiting factor.

Parts of the methods described herein can be performed by the device 500 with the help of the data-processing unit 510 that runs the program stored in the memory 560 or the read/write memory 550. The method described herein is executed when the device 500 runs the program.

The foregoing description of the preferred embodiments of the present invention has been provided for illustrative and description purposes. It is not intended to be exhaustive, or to limit the invention to the described variants. Many modifications and variations according to the appended claims will obviously be apparent to one skilled in the art. The embodiments have been chosen and described in order to best explain the invention and its practical applications, and to thereby enable one skilled in the art to understand the invention in its various embodiments and with the modifications that are appropriate for the intended use.

**Claims**

1. A method for adapting the velocity of a vehicle (1) during driving of the vehicle along a route of travel, comprising the steps of: prescribing (S1) velocity in the form of a velocity profile comprising retardations along the route of travel of the vehicle based on the occurrence of velocity-limiting factors along the route of travel of the vehicle; prescribing (S2) a target velocity associated with a velocity-limiting factor, and controlling (S3) the vehicle velocity so that a velocity associated with said target velocity is permitted to be higher than the target velocity by a given offset, **characterized in that** said offset is adapted so that a relatively larger offset is permitted in connection with a non-safety-critical velocity-limiting factor and a relatively smaller offset is permitted in connection with a safety-critical velocity-limiting factor.

2. A method according to claim 1, wherein safety-critical velocity-limiting factors include velocity limitations when taking curves.

3. A method according to claim 1 or 2, wherein non-safety-critical factors include changes in velocity limitation along the route of travel of the vehicle.

4. A method according to any of claims 1-3, comprising the step of executing said velocity profile by continuously determining required retardations.

5. A system (I) for adapting the velocity of a vehicle (1) during driving of the vehicle along a route of travel, comprising means (160) for prescribing velocity in the form of a velocity profile comprising retardations along the route of travel of the vehicle based on the occurrence of velocity-limiting factors along the route of travel of the vehicle; and means (130) for prescribing a target velocity associated with a velocity-limiting factor, and means (150) for controlling the vehicle velocity so that a velocity associated with said target velocity is permitted to be higher than the target velocity by a given offset, **characterized by** comprising means (152) for adapting said offset so that a relatively larger offset is permitted in connection with a non-safety-critical velocity-limiting factor and a relatively smaller offset is permitted in connection with a safety-critical velocity-limiting factor.

6. A system according to claim 5, wherein safety-critical factors include velocity limitations when taking curves.

7. A system according to claim 5 or 6, where non-safety-critical velocity-limiting factors include changes in velocity limitation along the route of travel of the vehicle.

8. A system according to any of claims 5-7, comprising means (170) for executing said velocity profile by continuously determining required retardations.

9. A vehicle (1) containing a system according to any of claims 5-8.

10. A computer program (P) for adapting the velocity of a vehicle during driving of the vehicle along a route of travel, wherein said computer program (P) contains program code which, when it is run by an electronic control unit (100) or another computer (500) connected to the electronic control unit (100), enables the electronic control unit (100) to perform the steps according to claims 1-4.

11. A computer program product containing a digital storage medium that stores the computer program according to claim 10.

**Patentansprüche**

1. Verfahren zur Anpassung der Geschwindigkeit eines Fahrzeugs (1) während des Fahrens des Fahrzeugs entlang einer Reiseroute, das die folgenden Schritte umfasst: Vorschreiben (S1) einer Geschwindigkeit in Form eines Geschwindigkeitsprofils, das Verzögerungen entlang der Reiseroute des Fahrzeugs basierend auf dem Auftreten geschwindigkeitsbegrenzender Faktoren entlang der Reiseroute des Fahrzeugs umfasst; Vorschreiben (S2) einer Zielgeschwindigkeit, die einem geschwindigkeitsbegrenzenden Faktor zugeordnet ist, und Steuern (S3) der Fahrzeuggeschwindigkeit derart, dass eine Geschwindigkeit, die der Zielgeschwindigkeit zugeordnet ist, um eine bestimmte Abweichung höher sein darf als die Zielgeschwindigkeit, **dadurch gekennzeichnet, dass** die Abweichung derart angepasst wird, dass eine relativ größere Abweichung in Verbindung mit einem nicht sicherheitskritischen geschwindigkeitsbegrenzenden Faktor erlaubt ist und eine relativ kleinere Abweichung in Verbindung mit einem sicherheitskritischen geschwindigkeitsbegrenzenden Faktor erlaubt ist.

2. Verfahren nach Anspruch 1, wobei zu den sicherheitskritischen geschwindigkeitsbegrenzenden Faktoren Geschwindigkeitsbegrenzungen beim Kurvenfahren gehören.

3. Verfahren nach Anspruch 1 oder 2, wobei zu den nicht sicherheitskritischen Faktoren Änderungen der Geschwindigkeitsbegrenzung entlang der Reiseroute des Fahrzeugs gehören.

4. Verfahren nach einem der Ansprüche 1-3, das den Schritt des Ausführens des Geschwindigkeitsprofils durch kontinuierliches Bestimmen der erforderlichen Verzögerungen umfasst.

5. System (I) zur Anpassung der Geschwindigkeit eines Fahrzeugs (1) während des Fahrens des Fahrzeugs entlang einer Reiseroute, das umfasst: Mittel (160) zum Vorschreiben einer Geschwindigkeit in Form eines Geschwindigkeitsprofils, das Verzögerungen entlang der Reiseroute des Fahrzeugs basierend auf dem Auftreten geschwindigkeitsbegrenzender Faktoren entlang der Reiseroute des Fahrzeugs umfasst; und Mittel (130) zum Vorschreiben einer Zielgeschwindigkeit, die einem geschwindigkeitsbegrenzenden Faktor zugeordnet ist, und Mittel (150) zum Steuern der Fahrzeuggeschwindigkeit derart, dass eine Geschwindigkeit, die der Zielgeschwindigkeit zugeordnet ist, um eine bestimmte Abweichung höher sein darf als die Zielgeschwindigkeit, **dadurch gekennzeichnet, dass** es Mittel (152) umfasst zum Anpassen der Abweichung derart, dass eine relativ größere Abweichung in Verbindung mit einem nicht sicherheitskritischen geschwindigkeitsbegrenzenden Faktor erlaubt ist und eine relativ kleinere Abweichung in Verbindung mit einem sicherheitskritischen geschwindigkeitsbegrenzenden Faktor erlaubt ist.

6. System nach Anspruch 5, wobei zu den sicherheitskritischen Faktoren Geschwindigkeitsbegrenzungen beim Kurvenfahren gehören.

7. System nach Anspruch 5 oder 6, wobei zu den nicht sicherheitskritischen geschwindigkeitsbegrenzenden Faktoren Änderungen der Geschwindigkeitsbegrenzung entlang der Reiseroute des Fahrzeugs gehören.

8. System nach einem der Ansprüche 5-7, das Mittel (170) zum Ausführen des Geschwindigkeitsprofils durch kontinuierliches Bestimmen der erforderlichen Verzögerungen umfasst.

9. Fahrzeug (1) mit einem System nach einem der Ansprüche 5-8.

10. Computerprogramm (P) zur Anpassung der Geschwindigkeit eines Fahrzeugs während des Fahrens des Fahrzeugs entlang einer Reiseroute, wobei das Programm (P) einen Programmcode umfasst, der die elektronische Steuereinheit (100) dazu befähigt, die Schritte nach Anspruch 1-4 durchzuführen, wenn er von einer elektronischen Steuereinheit (100) oder einem sonstigen mit der elektronischen Steuereinheit (100) verbundenen Computer (500) ausgeführt wird.

11. Computerprogrammprodukt mit einem digitalen Speichermedium, auf dem das Computerprogramm nach Anspruch 10 gespeichert ist.

**Revendications**

1. Procédé d'adaptation de la vitesse d'un véhicule (1) pendant la conduite du véhicule le long d'un itinéraire de déplacement, comprenant les étapes consistant à : imposer (S1) la vitesse sous la forme d'un profil de vitesse comprenant des retards le long de l'itinéraire de déplacement du véhicule sur la base de l'occurrence de facteurs de limitation de vitesse le long de l'itinéraire de déplacement du véhicule ; imposer (S2) une vitesse cible associée à un facteur de limitation de vitesse, et commander (S3) la vitesse du véhicule de telle sorte qu'une vitesse associée à ladite vitesse cible est autorisée à être supérieure à la vitesse cible d'un décalage donné, **caractérisé en ce que** ledit décalage est adapté de telle sorte qu'un décalage relativement plus grand est autorisé en liaison avec un facteur de limitation de vitesse non critique pour la sécurité et qu'un décalage relativement plus petit est autorisé en liaison avec un facteur de limitation de vitesse critique pour la sécurité.

2. Procédé selon la revendication 1, dans lequel des facteurs de limitation de vitesse critiques pour la sécurité comportent des limitations de vitesse lors de la prise de virages.

**3.** Procédé selon la revendication 1 ou 2, dans lequel des facteurs non critiques pour la sécurité comportent des changements dans la limitation de vitesse le long de l'itinéraire de déplacement du véhicule.

**4.** Procédé selon l'une quelconque des revendications 1 à 3, comprenant l'étape consistant à exécuter ledit profil de vitesse en déterminant en continu les retards requis.

**5.** Système (I) d'adaptation de la vitesse d'un véhicule (1) pendant la conduite du véhicule le long d'un itinéraire de déplacement, comprenant des moyens (160) pour imposer la vitesse sous la forme d'un profil de vitesse comprenant des retards le long de l'itinéraire de déplacement du véhicule sur la base de l'occurrence de facteurs de limitation de vitesse le long de l'itinéraire de déplacement du véhicule ; et des moyens (130) pour imposer une vitesse cible associée à un facteur de limitation de vitesse, et des moyens (150) pour commander la vitesse du véhicule de sorte qu'une vitesse associée à ladite vitesse cible est autorisée à être supérieure à la vitesse cible d'un décalage donné, **caractérisé en ce qu'**il comprend des moyens (152) pour adapter ledit décalage de sorte qu'un décalage relativement plus grand est autorisé en liaison avec un facteur de limitation de vitesse non critique pour la sécurité et qu'un décalage relativement plus petit est autorisé en liaison avec un facteur de limitation de vitesse critique pour la sécurité.

**6.** Système selon la revendication 5, dans lequel des facteurs critiques pour la sécurité comportent des limitations de vitesse lors de la prise de virages.

**7.** Système selon la revendication 5 ou 6, où des facteurs de limitation de vitesse non critiques pour la sécurité comportent des changements dans la limitation de vitesse le long de l'itinéraire de déplacement du véhicule.

**8.** Système selon l'une quelconque des revendications 5 à 7, comprenant des moyens (170) pour exécuter ledit profil de vitesse en déterminant en continu les retards requis.

**9.** Véhicule (1) contenant un système selon l'une quelconque des revendications 5 à 8.

**10.** Programme d'ordinateur (P) pour l'adaptation de la vitesse d'un véhicule pendant la conduite du véhicule le long d'un itinéraire de déplacement, dans lequel ledit programme d'ordinateur (P) contient un code de programme qui, lorsqu'il est exécuté par une unité de commande électronique (100) ou un autre ordinateur (500) connecté à l'unité de commande électronique (100), permet à l'unité de commande électronique (100) de réaliser les étapes selon les revendications 1-4.

**11.** Produit de programme d'ordinateur contenant un support de stockage numérique qui stocke le programme d'ordinateur selon la revendication 10.

Fig. 1

Fig. 2

Fig. 3a

Fig. 3b

START

S1 — PRESCRIBE VELOCITY IN THE FORM OF A VELOCITY PROFILE COMPRISING RETARDATIONS ALONG THE ROUTE OF TRAVEL OF THE VEHICLE BASED ON OCCURRENCE OF VELOCITY-LIMITING FACTORS ALONG THE ROUTE OF TRAVEL F THE VEHICLE

S2 — PRESCRIBE A TARGET VELOCITY ASSOCIATED WITH A VELOCITY-LIMITING FACTOR

S3 — CONTROL THE VEHICLE VELOCITY SO THAT A VELOCITY ASSOCIATED WITH SAID TARGET VELOCITY IS PERMITTED TO BE HIGHER THAN THE TARGET VELOCITY BY A GIVEN OFFSET, WHEREIN SAID OFFSET IS ADAPTED SO THAT A RELATIVELY LARGER OFFSET IS PERMITTED IN CONNECTION WITH A NON-SAFETY-CRITICAL VELOCITY-LIMITING FACTOR AND A RELATIVELY SMALLER OFFSET IS PERMITTED IN CONNECTION WITH A SAFETY-CRITICAL VELOCITY-LIMITING FACTOR

END

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010139383 A
- WO 03104014 A

- US 2014067226 A1